# EUROPÄISCHE PATENTSCHRIFT

(11) **EP 2 583 995 B1**
(45) Veröffentlichungstag und Bekanntmachung des Hinweises auf die Patenterteilung: **16.12.2015**
(21) Anmeldenummer: 11185922.9
(22) Anmeldetag: 20.10.2011
(51) Int. Cl.: C08J 9/00, C08J 9/28, C08F 2/44

(54) **Metallgefülltes Gießharz zur Herstellung eines porösen, harzgebundenen Formkörpers**
Metal-filled cast resin for producing a porous, resin-bonded moulding
Résine à couler contenant une charge métallique pour la fabrication de moulages poreux.

(43) Veröffentlichungstag der Anmeldung: 24.04.2013
(73) Patentinhaber: Hüther, Ulrich, 48599 Gronau (DE)
(72) Erfinder: Hüther, Ulrich, 48599 Gronau (DE)
(74) Vertreter: Freischem & Partner Patentanwälte mbB

(56) Entgegenhaltungen:
- US-A- 6 067 430
- US-A1- 2010 205 709
- US-A1- 2010 307 665

## Beschreibung

Die Erfindung betrifft eine Zusammensetzung und ein Verfahren zur Herstellung eines porösen, harzgebundenen Formkörpers, Platten und Blöcke sowie den Formkörper selbst oder die Platten und Blöcke für die Anwendung im Formenbau für verschiedene Anwendungen wie beispielsweise die keramische Industrie, Vakuumtiefziehverfahren, die Filterindustrie, Ansaugformen und - vorrichtungen beispielsweise auf Transportbändern.

In der keramischen Industrie konkurrieren vor allem Gipsformen mit Kunststoffformen aus speziellen Harzen. Gipsformen weisen einen Porendurchmesser von 2,3 bis 2,5 µm und einen Porenanteil von etwa 50 Vol.-% auf. Pro Gipsform können etwa 30 bis 100 Teile hergestellt werden. In den Kunststoffformen des Standes der Technik können dagegen einige tausend Teile gefertigt werden. Der Erfinder Dr. G. Will spricht von 2000 bis 3000 möglichen Abformungen (siehe DE1808391). Die Formen weisen aber schlechte Werte hinsichtlich Porengröße und Porosität auf. Bei den meisten kommerziellen Harzen ist der Porendurchmesser sogar größer als 20 µm. Dies führt zu raueren Oberflächen bei den fertigen keramischen Teilen.

An der Verbesserung der Formoberfläche durch keinere Porendruchmesser und der Porosität kunststoffbasierter Formmaterialien haben sich schon größere Unternehmen vergeblich "versucht".

Das Patent US3669911A, des Erfinders Najvar Daniel beschreibt feinporöse Harze.

Bei Sichtung des Standes der Technik ist der Erfinder Dr. Günther Will mit unzähligen Schutzrechten auf diesem Gebiet aufgefallen. Man findet Patente dieses Erfinders im Zeitraum von 1952 bis 1997. In seiner Anfangszeit beschäftigte sich Will mit der Herstellung von Kunststoffen für dentalmedizinische Zwecke (vgl, DE944458). Später folgen Patentanmeldungen zur Herstellung poröser Kunststoffe. In den Patenten des Erfinders G. Will werden im Wesentlichen zwei gängige Methoden zur Herstellung poröser Kunststoffe beschrieben (vgl. DE1928026):
1) Das Aushärten einer Wasser-Öl- Emulsion, die gegebenenfalls Füllstoffe zur Wasseraufnahme enthält.
2) Das Aufschäumen von Kunststoffmassen in Gegenwart eines Treibmittels (Gaserzeugung).

Dr. G. Will beschreibt in seinen Patenten, dass die Porengröße beziehungsweise das Porenvolumen durch den Wassergehalt der Emulsion eingestellt werden kann. Außerdem beschreibt er in DE1669779 den Einsatz eines Gemisches aus Wasser und niederen Alkoholen zur Porenbildung. In US 3,256,219 wird beschrieben, dass Porengrößen von 0,1 µ bis 600 µ möglich sind. In CH 778529 und AT241828 wird beschrieben, dass die Porengröße im Prinzip unter 1 µ liegen kann. Solche Produkte sind aber nie im Handel verfügbar gewesen. Es ist offensichtlich, dass Produkte in diesem Porengrößenbereich aufgrund ihrer schlechten mechanischen Eigenschaften, insbesondere ihrer schlechten Druckfestigkeit, bisher nie zum Einsatz kamen.

Im Folgenden Exkurs werden Beispiele von Produkten im Stand der Technik mit ihren wesentlichen Eigenschaften (Porengröße, Porosität und Druckfestigkeit) dargestellt:
Die Firma Poromer macht (siehe www.poromer.de) über die eigenen Produkte folgende Angaben:

| Material | Mittlerer Porendurchmesser | Porosität | Druckfestigkeit |
|---|---|---|---|
| Micropor | 26 µm | 34,7 % | 24 N/mm² |
| Micro SOG | 32 µm | 34,9 % | 24 N/mm² |
| Plastipor 85 | 30 µm | 28 % | 29 N/mm² |
| Plastipor ECO | 44 µm | 26,9 % | 27 N/mm² |
| Sanipor K3 | 28 µm | 28,3 % | 30 N/mm² |
| Sanipor ECO | 46 µm | 27 % | 27 N/mm² |
| Mammut 2000 | 36 µm | 29 % | 40 N/mm² |

BK Guilini berichtet über folgende Produkte (siehe www.bk-giulini-pcg.com/dyndata/Products_Gil-Resin_en.pdf):

| Material | Mittlerer Porendurchmesser | Porosität | Druckfestigkeit |
|---|---|---|---|
| Gil-Resin S | 40 - 50 µm | 25 - 30% | 46 - 49 N/mm² |
| Gil-Resin T | 16 - 24 µm | 25 - 30 % | 44 - 47 N/mm² |
| Gil-Resin TA | 14 - 26 µm | 25 - 30 % | 42 - 45 N/mm² |

Die Firma Sacmi gibt in einer Informationsbroschüre (www.sacmi.com/System00/00/96/9671/633540644617343150_1.pdf) für ihr poröses Formenmaterial "Sacmi Por" einen mittleren Porendurchmesser von 5 bis 7 µm an. Der Anmelderin ist aber bekannt, dass die tatsächlichen Porengrößen in Sacmiformen in der Regel lediglich zwischen 8 und 10 µm liegen. Somit ist das Formenmaterial der Sacmi Group in Bezug auf die Porengröße Marktführer. Für die Porosität des Materials werden 27 bis 37 % und für die Druckfestigkeit 30 N/mm² angegeben. Die Besonderheit bei Sacmi ist, dass das Formenmaterial als Harzmischung nicht käuflich verfügbar ist, d.h. es können lediglich fertige Produktionsformen für die Keramikindustrie bestellt werden, welche bei Sacmi hergestellt werden. Offensichtlich soll auf diese Weise das "Know-how" in Bezug auf Material und Verfahrenstechnik geschützt werden. Die Wartezeit des Kunden von 2 bis 3 Monaten auf eine solche Sacmi-Form und ein unverhältnismäßig hoher Preis macht die große Nachfrage nach einem Formenmaterial mit Poren < 10 µm deutlich.

Neben den gießbaren Formmaterialien sind auch feinporige Materialien als Blockware auf dem Markt. Ein Beispiel dafür ist METAPOR®, ein mikroporöser, luftpermeabler Werkstoff für den Formenbau auf der Basis von EP-Harz (10-35 %) und Aluminiumpulver (65 - 90 %). Es handelt sich um Platten und Blöcke, die im Pressverfahren hergestellt werden.

Hersteller ist die Schweizer Firma portec (www.portec.ch). METAPOR® ist in 500 x 500 mm Blöcken mit unterschiedlichen Dicken (10 - 420 mm) und in verschiedenen Typen verfügbar. Eine Neuentwicklung der Firma Portec ist das METAPOR ProtoBlock WHITE®, welches auf Basis von Aluminiumhydroxid hergestellt wird. METAPOR® wird spanend verarbeitet. Beispiele sind in folgender Tabelle dargestellt:

| Material | Mittlerer Porendurchmesser | Porosität |
|---|---|---|
| METAPOR BF-100 AL | ca. 15 µm | ca. 15 % |
| METAPOR CE-100 AL | ca. 10 µm | ca. 20 % |
| METAPOR MC-100 AL | ca. 400 µm | ca. 26 % |
| METAPOR HD-210 AL | ca. 12 µm | ca. 16 % |
| METAPOR HD-100 AL | - | - |
| METAPOR ProtoBlock WHITE | ca. 12 µm | - |

Außerdem wird das pastöse, nicht gießfähige, luftpermeable ESPOR®-System angeboten, das ohne Schrumpf aushärtet und dessen Porengröße nicht spezifiziert wird. METAPOR® dient der Herstellung von Werkzeugen für das Thermoformen, das Vakuumformen, die Vakuumfixierung und die Luftpolsterung. ESPOR® wird zur Herstellung von Gießformen verwendet.

Nach diesem Exkurs zu feinporösen, kommerziell verfügbaren Kunststoffmaterialien nun zurück zu den Patenten des Erfinders Dr. G. Will. Dieser beschreibt in gefundenen Patenten, dass vor allem die Entfernung des Emulsionswassers technisch nachteilig ist. Die Füllstoffe sind unter anderem: Gelatine, Alginsäure, Celluloseäther, kolloidale Kieselsäure, Kieselgur oder wasserlösliche Kolloide beispielsweise Polysäure; Mikrohohlglaskugeln, Ruß, Graphit, Kreide, Gips, Zement, Aluminiumoxid, Aluminiumhydroxid, Kaolin, Phosphate, Ammoniumpolyphosphat, Montmorillonit, geblähte Mineralien, Polystyrol- oder Polyurethanschaumpartikel... (siehe GB879207; CH386694; DE29806606U1). Allerdings werden die Eigenschaften der hergestellten Produkte durch die Füllstoffe bestimmt.

US 2010/307665 A1 beschreibt Reaktoren zur Herstellung von Schaumstoffen. Dies Dokument offenbart ein Verfahren zur Herstellung von Polymerschaum, wobei eine Emulsion mit hoher innerer Phase (HIPE), umfassend eine wässrige Phase und eine Ölphase, gehärtet wird. Die Ölphase enthält leitfähige Teilchen wie Metallpulver oder Metallflocken.

US 6,067,430 A beschreibt ein fluoriertes Schaumstoffmaterial, das aufgeladen werden kann. Dieses Dokument offenbart einen gefüllten polymeren Schaum mit einem Porendurchmesser von 1 bis 9 µm. Metallpulver wird als Füllstoff erwähnt.

In AT307752beschreibt Will die Emulsionspolymerisation mit Nachbehandlung in einer Wasserdampfatmosphäre, um unkontrolliertes Schrumpfen zu vermeiden.

In den Will-Patenten wird beschrieben, dass es für die Bildung eines offenen Porensystems erforderlich ist, die wässrige Phase vor oder während der Polymerisation zu öffnen. Infolge der sehr feinen Verteilung des Porenbildners und des Polymerisationsschwundes der organischen Phase tritt beim Öffnen der wässrigen Phase jedoch ein Phasenumschlag ein, unter dessen Einwirkung ein grobes schwammartiges Festprodukt mit großen Hohlräumen entsteht, oder es bildet sich sogar ein pulverförmiges bis feinkörniges Festpolymerisat. Mit DE1928026 strebt Will an, unter bestimmten Bedingungen das Öffnen der wässrigen Phase so zu steuern, dass nicht ein aus feinen Partikeln bestehendes Festpolymerisat gebildet wird, sondern die Kontinuität der polymeren Phase erhalten bleibt, ohne dass die mit der Emulsion vorgegebene Verteilung des Wassers in der ÖlPhase gestört wird. Das "Öffnen der wässrigen Phase" ist so zu verstehen, dass sie vom dispersen in den co-kontinuierlichen Zustand übergeht. Damit liegen am Ende der Härtung zwei kontinuierliche Phasen vor: eine kontinuierliche Kunststoff- und eine kontinuierliche Wasserphase.

In DE1220606 beschreibt Will den Einsatz von Basen zur Neutralisierung der freien Säuregruppen von ungesättigten Polyestern, die ebenfalls als polymere Matrix geeignet sind.

Die in den Will-Patenten beschriebenen Emulgatoren für eine Emulsion der organischen und er wässrigen Phase sind im Allgemeinen in Vinylmonomeren löslich. Beispiele für genannte Emulgatoren:
- Erdalkali und Aluminiumseifen (AT309829)
- Fettsäureanilide (AT309829)
- Sterine und Stereoide (AT309829)
- Harze (ungesättigte Polyester) (AT309829)
- Polymere aus Vinylmonomeren (Styrol und Ester der Acrylsäure, die endständige hydrophile Gruppen besitzen) (AT309829)
- Ester höherer Fettsäuren mit mehrwertigen Alkoholen (AT309829)
- Amide höherer Fettsäuren (AT309829)
- Salze von Alkylsulfonsäuren (AT309829)
- Gesättige und ungesättigte Polyester, insbesondere wenn sie mit Alkalien zu einem Teil oder vollständig neutrslisiert worden sind oder wenn sie eine ausreichende Zahl von freien Hydroxylgruppen enthalten (siehe DE1199982; DE1267845)
- Pfropf-Mischpolymerisate, die in Gegenwart von Polyalkylenoxyden aus Styrol erzeugt werden (DE1169671)
- Filmbildende Polymere, wie beispielsweise Cyclokautschuk oder Mischpolymerisate von Vinylverbindungen mit einem 8 C-Atome aufweisenden Rest (DE1148382)
- Emulgator Pluronic 105 (AT329881)
- Emulgator Pluronic 127 (AT329881)
- PO3H2-Gruppen enthaltende Emulgatoren (können beispielsweise durch Polymerisation von β-Styrolphosphonsäure und Methacrylsäuremethylester hergestellt werden (DE1495256)

In AT329881 beschreibt Will den Zusammenhang zwischen der Zellstruktur und der Viskosität der Emulsion. Durch bestimmte Kenngrößen der Emulsion ist eine Bestimmung des Typs des entstehenden Polymerisates im Voraus möglich. Der Dispersionsgrad kann durch Leitwerte, wie beispielsweise Viskosität, elektrische Leitfähigkeit, Trübung der Emulsion oder ähnliche physikalische Größen, messend bestimmt und verfolgt werden.

In den 1990er Jahren beschäftigte sich Will hauptsächlich mit der Patentierung von härtbaren Kunstoffbindemitteln mit kornförmigen Füllstoffen (beispielsweise Mikrohohlglaskugeln oder Quarzpulver) (EP0876890B1). Als Bindemittel werden polymerisierbare Harzsysteme, beispielsweise Polyesterharzsysteme, Epoxyharzsysteme, Phenolharze und Furanharze sowie (Meth)acrylatharzsysteme eingesetzt (siehe DE29806606U1 oder CH490960A). Eine bekannte Technik zur Verarbeitung von Gießharzen ist beispielsweise das Ausschäumen einer mit Füllstoffen gefüllten Form mit Reaktionsschäumen aus Polyurethan oder Phenolharz (DE1704853). Die Herstellung und Verarbeitung von härtbaren W/O-Emulsionen (Emulsionen einer wässrigen und einer organischen Phase), die in der Ölphase mit Wasser emulgierbare Monomere und/oder Gießharze enthalten, zusammen mit kornförmigen Feststoffen ist bekannt (DE3241798). Bei diesen Verfahrensweisen werden die Feststoffe mit einer W/O-Emulsion gemischt, worauf nach Formgebung im offenen Guss oder nach Gießen der Masse unter einem Pressdruck ausgehärtet wird. Von erheblichem Nachteil bei diesem Verfahren sind der Mischprozess, der eine Einstellung einer kurzen Topfzeit und eine rasche Aushärtung nur mit hohem apparativem Aufwand erlaubt, ferner die Emission von Monomeren und die relativ hohen Mengen von Rückständen aus dem Mischprozess. Es war daher bisher nicht möglich, W/O-Emulsionen mit kornförmigen Feststoffen zu feinporösen Formkörpern auszuhärten (EP0876890A2).

Zur Füllung der Formen mit feinkörnigen Füllstoffen werden diese evakuiert und zusätzlich wird die Zentrifugalkraft ausgenutzt. Um einen feinkörnigen Füllstoff (beispielsweise Mikrohohlglaskugeln) in ein dünnflüssiges Harz, wie ein Epoxyharz oder ein Polyesterharz, einzubringen, wird die Form in einem evakuierten Raum mit dem Füllstoff gefüllt und anschließend mit dem flüssigen Harz überschichtet und zentrifugiert. Das Harz dringt dabei unter gleichzeitiger Entlüftung in die durch den Füllstoff gebildeten leeren Zwischenräume ein und bildet nach Härtung einen weitgehend blasenfreien, leichten Werkstoff (EP0151461).

In DE 1928026A1 ist die Herstellung poröser Formkörper aus W/O-Emulsionen beschrieben, die neben Wasser und den Monomeren darin quellbare/lösliche, feinkörnige Polymerpartikel enthalten. Ein derartiges Polymerisationssystem besteht beispielsweise aus Polymethylmethacrylat (PMMA), Methylmethacrylat (MMA) und Wasser im Massenverhältnis 1:1:1. Die gießbaren Emulsionen werden nach diesem Stand der Technik nach Zugabe von Härtern, Beschleunigern und nach Formgebung durch Gießen in einer entsprechenden Form ausgehärtet. Mit dem Einsetzen der Härtung wird die Emulsion durch Entzug der Monomeren und die Quellung des polymeren Anteils instabil. Die Phasen zeigen Koaleszenz, und es bilden sich relativ grobe Poren mit einem Durchmesser von 10 bis 40 µm aus. Dies hat zur Folge, dass ein höherer Druck von etwa 15 bis 40 bar erforderlich ist. Nach diesem Verfahren hergestellte Formwerkstoffe sind entsprechend nur für Druckgußformen einsetzbar. Die Formherstellung und der maschinelle Aufwand hierzu sind wegen der Druckbeaufschlagung bei der Anwendung und der zur Herstellung erforderlichen speziellen Perlpolymerisate mit hohen Kosten verbunden, so dass auch diese herkömmliche Verfahrensweise nur für eine spezielle industrielle Produktion poröser Formwerkstoffe als Ersatz für Gips geeignet ist.

US4346149 beschreibt eine Zusammensetzung enthaltend Acrylharz, Wasser und Aluminiumpulver. Ziel in dieser Druckschrift ist die Vermeidung von Poren bei Füllung von Harzen mit metallischen Füllstoffen, weshalb ein Antischaummittel beigefügt ist. Das Aluminiumpulver macht weniger als 10 Gew.% der Zusammensetzung aus. Das beschriebene Erzeugnis ist ein Lack, der besonders porenfrei sein soll.

DE4104295A1 beschreibt eine Zusammensetzung enthaltend Acrylharz, Wasser und nichtmetallischen Füllstoff für die Herstellung von Arbeitsplatten im Küchenbereich.

WO2009015788A2 beschreibt einen Metalliclack für Automobile und eine Zusammensetzung enthaltend Wasser, filmbildendes Mittel und Aluminiumeffektpigment.

Aufgabe der vorliegenden Erfindung ist die Bereitstellung einer gießfähigen Zusammensetzung zur Herstellung einer Kunststoffform oder eines Formteils, Blocks oder einer Platte, die eine verbesserte Wärmeleitfähigkeit und dabei dennoch eine hohe Porosität mit kleinen Porendurchmessern aufweist.

Diese der Erfindung zu Grunde liegende Aufgabe wird in einer ersten Ausführungsform gelöst durch eine gießfähige Zusammensetzung zur Herstellung eines porösen, harzgebundenen Formkörpers enthaltend
a) 100 bis 200 Gewichtsteile einer Harzmischung,
b) 100 bis 200 Gewichtsteile einer Wasserkomponente,
c) 80 bis 700 Gewichtsteile Metallpartikel, und
d) 1 bis 15 Gewichtsteile Radikalstarter.

Erstmals ist es mit einer solchen Zusammensetzung möglich, eine Kunststoffform, ein Formteil, einen Block oder eine Platte herzustellen, die eine verbesserte Wärmeleitfähigkeit, Temperaturbeständigkeit und dabei dennoch eine hohe Porosität und einen kleinen Porendurchmesser aufweist.

Vorteilhafterweise enthält die Zusammensetzung wenigstens 150, insbesondere wenigstens 300 Gewichtsteile Metallpartikel. Dadurch kann im Unterschied zum Stand der Technik eine besonders hohe Wärmeleitfähigkeit des entstehenden Formkörpers erzielt werden.

Vorteilhafterweise enthält die erfindungsgemäße Zusammensetzung 115 bis 160 Gewichtsteile der Harzmischung. Unabhängig davon oder in Kombination hiermit enthält die erfindungsgemäße Zusammensetzung vorteilhafterweise 120 bis 170 Gewichtsteile der Wasser Komponente. Unabhängig davon oder in Kombination hiermit enthält die erfindungsgemäße Zusammensetzung vorteilhafterweise 400 bis 550 Gewichtsteile Metallpartikel. Unabhängig davon oder in Kombination hiermit enthält die erfindungsgemäße Zusammensetzung vorteilhafterweise 5 bis 10 Gewichtsteile Radikalstarter. Diese besonderen Gewichtsverhältnisse für sich allein genommen und insbesondere die Kombination dieser Gewichtsverhältnisse haben sich als besonders vorteilhaft erwiesen, besonders kleine Porendurchmesser bei einer hohen Wärmeleitfähigkeit und Temperaturbeständigkeit des daraus hergestellten Formkörpers zu erzielen.

An sich sind als Bestandteile für die erfindungsgemäße Harzmischung beispielsweise jede polymerisierbaren oder anderweitig härtbaren und mit Wasser emulgierbaren flüssigen Stoffe geeignet. Als solche kommen beispielsweise in Frage: Gemische aus Harzen und Monomeren mit relativ niedrigen Molekulargewichten, gegebenenfalls vermischt mit damit copolymerisierenden organischen Flüssigkeiten. Diese Monomere können im Molekül wenigstens eine olefinische Doppelbindung enthalten. Solche Verbindungen können beispielsweise solche sein, die an einem aromatischen Kern gebundene Vinyl- oder α-Alkylvinyl-Gruppen aufweisen, wie bei beispielsweise Styrol, Divinylbenzol, Trivinylbenzol, Methylstyrole, α-Methylstyrol. Weiterhin gehören zu den geeigneten Verbindungen beispielsweise auch Ester und Ether des Vinylalkohols, wie beispielsweise Vinylacetat, Divinylphthalat, Divinylmaleat, Vinylbutylether, Divinylethandiolether, sowie Ester der Acryl- oder Methacrylsäure, wie beispielsweise Ethylacrylat, 1,2-Propandioldiacrylat, Methylmethacrylat, Ethylmethacrylat, Ethandiolmethacrylat, Buten-2-diol-1,4-dimethacrylat, Cyclohexylmethacrylat oder Maleinate, wie Diethylmaleinat und Fumarsäureester. Isopren, und Ether und Ester des Allyl- oder Methallylalkohols, wie beispielsweise Diallylphthalat, Methallylmethylfumarat, 1,2,3-Tri-(allyloxy)-propan, Diallyldiglycolcarbonat und Diallylmaleat. Diese und andere Ausgangsmaterialien sind im Wesentlichen beispielsweise in der US-Patentschrift RE 27444 und in der deutschen Patentschrift 1137554 beschrieben, auf deren Inhalt hiermit ausdrücklich Bezug genommen wird. Mit diesen flüssigen Monomeren können auch gasförmige oder feste Monomere vermischt werden, sofern sie, wie beispielsweise Butadien, Vinylchlorid, Vinylnaphthalin, Vinylcarbazol und dergleichen, mit dem flüssigen Monomeren ein flüssiges Gemisch ergeben.

Das Monomer oder Monomergemisch dient gegebenenfalls außerdem dem Harzbestandteil als Lösungs- oder Verdünnungsmittel. Dieser Harzbestandteil kann ein hochmolekulares Homo- oder Copolymerisat sein, das mit dem Monomer oder Monomergemisch zu copolymerisieren vermag. Neben ungesättigten Polyestern sind hierfür beispielsweise auch Copolymerisate aus Styrol und Butadien geeignet. Besonders bewährt haben sich beispielsweise ungesättigte Polyester, die durch Kondensation von zweiwertigen Alkoholen, wie beispielsweise Ethandiol, 1,2-Propandiol, 1,3-Propan-diol, Diethylen-glycol, 1-Allyl-2,3-hydroxypropanol einerseits mit einer α,β-ethylenisch ungesättigten Dicarbonsäure, wie beispielsweise Maleinsäure, Fumarsäure und dergleichen erhalten werden. Außerdem können die ungesättigten Polyester beispielsweise noch andere zwei- und mehrwertige Carbonsäuren enthalten, wie beispielswiese Endomethylentetrahydrophthalsäure, Tetrahydrophthalsäure, Phthalsäure, Bernsteinsäure, Adipin-säure, Propionsäure, Benzoltricarbonsäure, Benzoltetracarbonsäre, oder auch andere Alkohole, wie Benzylalkohol, 1,2-Di-(allyloxy)-3-propanol-Glycerindiallyl-ether, Pentaerythrit, sowie Hydroxycarbonsäuren, wie beispiels weise 4-Hydroxymethylcyclohexancarbonsäure. Auch diese Substanzen sind im Wesentlichen aus US27444 sowie aus der DE2046575 und aus DE1024654, DE1067210 und DE1081222 bekannt, auf deren Inhalt hiermit ausdrücklich Bezug genommen wird.

In Verbindung mit selbstemulgierenden Polyestern sind auch beispielsweise Epoxydverbindungen mit mehr als einer Epoxydverbindung als polymerisierbare Phase einsetzbar.

Die erfindungsgemäße Harzmischung enthält beispielsweise Monomere ausgewählt aus der Gruppe Methacrylat und Derivate, Polyester und Derivate, Epoxid und Derivate, Furan und Derivate, Phenol und Derivate, Acrylat und Derivate, Styrol und Derivate, beliebige Mischungen der vorgenannten Monomere.

Vorteilhafterweise enthält die Harzmischung folgende Bestandteile:
i) 30 bis 94 Gew.% Methacrylat, Methacrylatderivate oder Mischungen derselben,
ii) 5 bis 65 Gew.% Styrol, Styrolderivate oder Mischungen derselben,
iii) 1 bis 5 Gew.% Hilfsstoffe, ausgewählt aus der Gruppe Emulgatoren, Beschleuniger und Mischungen derselben.

Unabhängig davon oder in Kombination mit diesen speziellen Gewichtsverhältnissen enthält die Harzmischung vorteilhafterweise:
50 bis 92 Gew.% Methylmethacrylat und/oder Monostyrol,
5 bis 25 Gew.% Epoxymethacrylat und/oder ein Polyester,
2 bis 20 Gew.% 2-Hydroxyethylmethacrylat, und
1 bis 5 Gew.% Hilfsstoffe, ausgewählt aus der Gruppe Dispergiermittel, Emulgator, Beschleuniger und Mischungen derselben.

Diese besondere Kombination der Bestandteile der Harzmischung führt zu einem Formkörper, der neben einem besonders niedrigen Porendurchmesser für eine besonders feine Oberfläche auch eine besonders gute Festigkeit für den Formenbau beispielsweise für Acrylbadewannen aufweist.

Vorzugsweise enthält die erfindungsgemäße Harzmischung 1 bis 4 Gewichtsprozent Emulgator oder eine Mischung von Emulgatoren. Dies sorgt für eine leichtere Verarbeitung der aus der Zusammensetzung entstehenden Emulsion, so dass die erfindungsgemäße Zusammensetzung länger verarbeitet werden kann und somit die Gussform für den Formenbau leichter befüllt werden kann. Besonders bevorzugt kann in der erfindungsgemäßen Harzmischung 0,05 bis 2 Gew.% Alkyl-alkoholethoxylat als Emulgator enthalten sein. Unabhängig davon oder in Kombination hiermit kann besonders bevorzugt 1,5 bis 3 Gew.% einer gesättigten Lösung eines BlockCopolymeren mit basischen Gruppen in der erfindungsgemäßen Harzmischung enthalten sein.

Vorzugsweise enthält die erfindungsgemäße Harzmischung 0,01 bis 0,5 Gew.% Beschleuniger, insbesondere ausgewählt aus der Gruppe N,N-Dimethylanilin (DMA), N,N-Diethylanilin (DEA), N,N-Bis-(2-hydroxyethyl)-m-toluidin, N,N-Bis-(2-hydroxyethyl)-p-toluidin (HEPT), N,N-Dimethyl-p-toluidin (DMPT), N-Methyl-N-(2-hydroxyethyl)-p-toluidin (MHPT) oder Mischungen derselben.

Vorzugsweise enthält die erfindungsgemäße Harzmischung 2 bis 20 Gew.% 2-Hydroxyethylmethacrylat (HEMA). Es hat sich gezeigt, dass dieser Bestandteil in dieser Menge die Metallpartikel besonders gut miteinander verklebt und zu einer besonders guten Festigkeit des Formkörpers führt.

Die erfindungsgemäße Harzmischung enthält vorzugsweise 45 bis 64 Gew.% Metyhlmethacrylat. Unabhängig davon oder in Kombination hiermit enthält die erfindungsgemäße Harzmischung vorzugsweise 20 bis 24 Gew.% Epoxymethacrylat, Unabhängig davon oder in Kombination hiermit enthält die erfindungsgemäße Harzmischung vorzugsweise 11 bis 16 Gew.% 2-Hdroxymethylmethacrylat. Unabhängig davon oder in Kombination hiermit enthält die erfindungsgemäße Harzmischung vorzugsweise 4 bis 10 Gew.% Monostyrol. Diese Gewichtsanteile jeweils für sich allein genommen und insbesondere die Kombination dieser Gewichtsanteile der erfindungsgemäßen Harzmischung führen zu einem Formkörper der den Formkörpern im Stand der Technik beispielsweise für die Anwendung in der keramischen Industrie in allen wichtigen Eigenschaften überlegen ist.

Vorzugsweise enthält die Wasserkomponente neben Wasser auch 0,1 bis 3 Gew.% Glykolether, Derivate von Glykolether oder Mischungen derselben. Es hat sich gezeigt, dass dieser Zusatz in der Wasserkomponente zu einer besonders stabilen Emulsion der erfindungsgemäßen Zusammensetzung führt.

Der Radikalstarter kann beispielsweise entweder ein wärmelatenter oder ein peroxidischer Radikalstarter wie beispielsweise BPO sein.

Die Metallpartikel sind vorzugsweise Aluminiumpartikel.

Die Metallpartikel weisen vorzugsweise einen mittleren Durchmesser von 0,1 bis 300 µm, insbesondere in einem Bereich von 5 bis 100 µm auf. Unterhalb dieses Bereiches entsteht meist eine nicht gießfähige Paste. Oberhalb dieses Bereiches entsteht meist keine Gießmasse, da dann die Sedimentation zu stark wird.

Vorzugsweise sind in der Zusammensetzung überwiegend Metallpartikel enthalten. Dadurch ist die Wärmeleitfähigkeit des entstehenden Formkörpers besonders hoch.

Vorzugsweise sind in der Zusammensetzung mehr Gewichtsteile der Wasserkomponente als Gewichtsteile der Harzmischung enthalten. Dies hat zur Folge, dass die Porosität des entstehenden Formkörpers besonders hoch ist.

In einer weiteren Ausführungsform wird die der Erfindung zu Grunde liegende Aufgabe gelöst durch ein Verfahren zur Herstellung eines porösen, harzgebundenen Formkörpers, wobei man
a) in einem ersten Schritt die Zusammensetzung zu einer Emulsion verrührt, und
b) in einem zweiten Schritt diese Emulsion in eine Gussform gießt, wobei sie unter Bildung eines Giesslings vorhärtet, und
c) in einem dritten Schritt den vorgehärteten Giessling entformt und für wenigstens 1 h bei über 100 °C erhitzt, wobei zum einen die Harzmischung aushärtet und zum anderen während der Aushärtung das Wasser entfernt wird,
so dass ein poröser, harzgebundener und mit Metallpartikeln gefüllter Formkörper entsteht.

Vorzugsweise gibt man im ersten Schritt zuletzt den Radikalstarter zu und verrührt die Zusammensetzung erst dann zu einer Emulsion. Dadurch härtet die Emulsion in der Gussform aus und kann leicht entformt werden. Vor der Zugabe des Radikalstarters wird die Zusammensetzung wenigstens 3 h, insbesondere wenigstens 20 h entlüftet. Dies geschieht beispielsweise durch Stehenlassen an der Luft oder alternativ durch Anlegen von Vakuum.

Den zweiten Schritt führt man vorzugsweise höchstens bis zu 15 Minuten nach Zugabe des Radikalstarters durch.

Der entformte Giessling wird beispielsweise ein einem Ofen nachgehärtet, wobei gleichzeitig das Wasser ausgetrieben wird.

Vorzugsweise stellt man im dritten Schritt die Temperatur auf nicht mehr als 130 °C ein, da ansonsten das ausgehärtete Harz zumindest teilweise zersetzt werden kann.

Vorzugsweise stellt man die Temperatur im dritten Schritt auf wenigstens 110 °C ein, da so das Wasser besonders effizient aus dem Harz ausgetrieben werden kann.

Im dritten Schritt hält man die Temperatur vorzugsweise 4 bis 20 h, und insbesondere wenigstens 8 h, damit der entstehende Formkörper möglichst vollständig durchhärten kann und das Wasser vollständig ausgetrieben werden kann.

Die endgültige Durchhärtung kann vorzugsweise nur thermisch geschehen.

Vorteilhafterweise stellt man die Temperatur in Schritt 3 je nach Volumen schrittweise bis auf beispielsweise über 100 °C erst wenigstens 1 h, insbesondere wenigstens 6 h nach Beginn der Vorhärtung durch den Katalysator ein, damit es keine Risse oder Spannungen im Formkörper gibt.

Beim erfindungsgemäßen Verfahren wird vorzugsweise das Wasser zumindest teilweise während der Aushärtung des Harzes ausgetrieben.

In einer weiteren Ausführungsform wird die der Erfindung zu Grunde liegende Aufgabe gelöst durch einen porösen, harzgebundenen und mit Metallpartikeln gefüllten Formkörper, dadurch gekennzeichnet, dass er einen mittleren Porendurchmesser in einem Bereich von 0,1 bis 10 µm aufweist.

Vorzugsweise wird der erfindungsgemäße Formkörper gemäß dem erfindungsgemäßen Verfahren hergestellt.

Die Porosität des erfindungsgemäßen Formkörpers liegt vorteilhafterweise in einem Bereich von 20 bis 50 %, insbesondere in einem Bereich von 30 bis 40 %. Die Porosität, durchschnittlicher Porendurchmesser und Porengrößenverteilung wurden nach DIN 66139 (Entwurf), DIN 66135 Teil 1 bis 4 , DIN ISO 9277 und DIN 66134 gemessen. Die Porosität im Sinne der Erfindung ist das Verhältnis von Hohlraumvolumen zu Gesamtvolumen.

Der durchschnittliche Porendurchmesser liegt vorteilhafterweise in einem Bereich von 0,1 bis 4 µm. Vorzugsweise weisen weniger als 10 % der Poren einen Porendurchmesser von mehr als 10 µm auf. Unabhängig davon oder in Kombination hiermit weisen weniger als 5 % der Poren einen Porendurchmesser von weniger als 0,4 µm auf. Unabhängig davon oder in Kombination hiermit weisen wenigstens 85 %, insbesondere wenigstens 90 % der Poren einen Porendurchmesser von 0,4 bis 10 µm auf. Unabhängig davon oder in Kombination hiermit weisen wenigstens 70 % der Poren einen Porendurchmesser von 1 bis 2 µm auf. Dadurch ist der erfindungsgemäße Formkörper beispielsweise ein für die Thermoformindustrie durch die Porosität, die hohe Wärmeleitfähigkeit und Temperaturbeständigkeit und die sehr glatte Oberfläche ein besonders gut geeigneter Formkörper. Auch für die keramische Industrie ist dieser Formkörper durch die hohe Stabilität und die sehr feine Oberfläche sehr gut geeignet.

Die Rohdichte liegt beispielsweise in einem Bereich von 0,5 bis 1,8 g/cm³ Die Reindichte liegt beispielsweise in einem Bereich von 1 bis 2,3 g/cm³.

Die Metallpartikel sind vorzugsweise Aluminiumpartikel.

Die Metallpartikel weisen vorzugsweise einen mittleren Durchmesser von 0,1 bis 300 µm, insbesondere in einem Bereich von 5 bis 100 µm auf. Unterhalb dieses Bereiches nimmt die Wärmeleitfähigkeit des entstehenden Formkörpers ab. Oberhalb dieses Bereiches scheint die Stabilität des entstehenden Formkörpers abzunehmen.

Das Gewichtsverhältnis von Metallpartikeln zu Harz liegt vorteilhafterweise in einem Bereich von 2:1 bis 5:1, insbesondere in einem Bereich von 3:1 bis 4:1.

Der erfindungsgemäße Formkörper enthält vorzugsweise
a) 15 bis 30 Gew.% Harz, und
b) 70 bis 85 Gew.% Metallpartikel.

Das Harz ist vorzugsweise überwiegend polymerisiertes Methylacrylat, Derivate und Mischungen derselben.

### Ausführungsbeispiel:

52 g Methylmethycrylat, 24 g Epoxymethacrylat, 15 g 2-Hydroxyethylmethacrylat, 7 g Monostyrol, 2 g Emulgator Byk W 971 (Emulgator der Firma Byk; gesättigte Lösung eines Block-Copolymeren mit basischen pigmentaffinen Gruppen) und 0,1 g DMPT als Beschleuniger wurden miteinander verrührt. Zu dieser Mischung wurden unter Rühren 105 g Wasser zugefügt, dem zuvor 1 g Glykolether beigemischt worden war. Diese resultierende Mischung wurde so lange gerührt, bis eine Emulsion entstand. In diese Emulsion wurden 320 g Aluminiumsprühgrieß mit einer Teilchengröße von weniger als 100 µm eingerührt. Zum Schluss wurde noch unter Rühren 5 g Benzolyperoxid beigefügt und die resultierende Mischung in eine Gussform gegossen, wobei bereits innerhalb kurzer Zeit ein vorgehärteter Giessling entstand. Nach 1 h wurde der vorgehärtete Giessling entformt und in einem Ofen innerhalb von 8 h schrittweise auf 120 °C gebracht und anschließend 8 h bei dieser Temperatur gehalten. Damit wurde während der Aushärtung das Wasser ausgetrieben. Anschließend war der Formkörper vollständig ausgehärtet.

Die durchschnittliche Porengröße betrug 1,6 µm. Die Porosität betrug 35 %. Die Reindichte betrug 2 g/cm³. Die Rohdichte betrug 1,4 g/cm³. Insgesamt hatten weniger als 6 % der Poren einen Porendurchmesser von mehr als 10 µm. Insgesamt hatten weniger als 2 % der Poren einen Porendurchmesser von weniger als 0,4 µm. Insgesamt hatten mehr als 70 % der Poren einen Porendurchmesser in einem Bereich von 1,2 und 1,8 µm. Insgesamt hatten mehr als 90 % der Poren einen Durchmesser in einem Bereich von 0,4 bis 10 µm.

### Vergleichsbeispiele:

### Vergleichsbeispiel 1

In 92,5 g Methacrylsaäuremethylester wurden 5 g E-Polystyrol und 3,5 g Benzoylperoxyd-Paste 50%ig gelöst. Dieser Lösung wurden 1,7 g Dimethylparatoluidin und 500 g Wasser unter kräftigem Mischen zugefügt. Die sich bildende Emulsion wurde bei 50 °C bis zur Formung einer gleichmäßigen, leicht fadenziehenden Gießmasse weitergerührt, dann in Formen gegossen und bei 50 °C auspolymerisiert. Es entstand ein festes Polymerisat, das Wasser in feinverteilter Form enthielt. Das Wasser wurde bei 60 °C ausgetrieben.

### Vergleichsbeispiel 2

In 100 cm³ Styrol wurden 2 g E-Polystyrol, 5 cm³ einer 60%igen Methylisobutylketonperoxyd-Lösung und 0,3 cm³ einer handelsüblichen Kobaltnaphthenatlösung gelöst. 60 cm³ dieser Lösung wurden mit 40 cm³ eines flüssigen Porenbildners, bestehend aus 93 cm³ Wasser und 7 cm³ Isopropanol, bis zur Emulsionsbildung gerührt. Die Emulsion wurde in einer Form bei 70 - 90 °C polymerisiert. Man erhielt ein festes Polymerisat, aus dem das Wasser bei Temperaturen bei zwischen 60 - 70 °C ausgetrieben wurde.

### Vergleichsbeispiel 3

In 100 cm³ Methylmethacrylat wurden 1,6 g Dimethylparatoluidin eingebracht, mit 100 g Polymethylmethacrylat (Perlpolymerisat, Korngröße etwa 20 µ), in dem 2 g Benzoylperoxyd feinverteilt waren, gemischt und anschließend mit 200 cm³ eines flüssigen Porenbildners bestehend aus 89 cm³ Wasser und 11 cm³ Isopropanol, bis zur Emulsionsbildung gerührt. Die Gießmasse wurde sodann in einer Form bei 40 - 50 °C in 10 - 15 Minuten polymerisiert. Man erhielt ein Festpolymerisat, aus dem der Porenbildner bei 50 °C ausgetrieben werden konnte.

### Vergleichsbeispiel 4

In 80 g Methylmethacrylat, 20 g Ethylenglykoldimethacrylat und 1,8 g Dimethylparatoluidin wurden 2,5 g eines E-Mischpolymerisates aus 25% Vinylacetat und 75 % Methylmethacrylat (Dispersionspolymerisat) gelöst. Die Lösung wurde mit 80 g Polymethacrylat (Perlpolymerisat, Korngröße 0,1 mm) unter Zugabe von 150 cm³ Wasser 15-20 Minuten kräftig gerührt. Der fertigen Emulsion wurden 2 g Bezoylperoxyd, gelöst in 15 cm³ Methylmethacrylat, zugegeben und gemischt. Die fertige Gießmasse wurde auf ein Glasfaservlies aufgetragen und durch Pressen und Verstreichen zwischen zwei Folien in dem Vlies verteilt. Danach wurde bei 50 °C in 10 - 15 Minuten ausgehärtet. Es entstand eine glasfaserverstärkte Kunststoffplatte. Das darin enthaltene Wasser dunstete bei 25 - 30 °C in etwa 24 h ab.

### Vergleichsbeispiel 5

In 90 cm³ Styrol, 10 cm³ Acrylnitril und 5 cm³ einer handelsüblichen 60%igen Methylisobutylketonperoxyd-Lösung wurden 2 g E-Polystyrol und 1 cm³ einer handelsüblichen Kobaltnaphthenat-Lösung eingebracht und gelöst. 100 cm³ dieser Lösung wurden mit 100 cm³ Wasser bis zur Bildung gerührt. Der Emulsion wurden 100 g Polymethylmethacrylat (Perlpolymerisat, Korngröße 20µ) zugemischt. Das Gemisch wurde in eine Form gegossen und bei 60 - 70 °C auspolymerisiert. Man erhielt ein Festpolymerisat, das bei 20 - 25 °C den Porenbildner in einiger Zeit abdunstete.

### Vergleichsbeispiel 6

65 g eines ungesättigten Polyesters wurden in 35 g Styrol gelöst. Diesem werden 2 g Benzoylperoxyd zugesetzt und das Ganze mit 100 cm³ Wasser, das nach und nach eingebracht wird, kräftig bei 10 °C bis zur Emulsionsbildung gerührt. Der Emulsion wurden 0,18 g Dimethylparatoluidin eingemischt und die so erhaltene Gießmasse in Platten gewünschter Stärke (z.B. 1 - 15 mm) vergossen und bei 30 °C in 10 Minuten ausgehärtet. Das so erhaltene Produkt dunstete das Wasser bei 80 - 100 °C ab.

### Vergleichsbeispiel 7

Wie nach Beispiel 6 wurde ein ungesättigter Polyester einer Dicarbonsäure und mehrwertigen Alkohols für C in gleicher Menge verwendet. An Stelle von Styrol wurde
a) ein Gemisch aus Diallylphthalat und Styrol 1:3
b) Allylchlorid
c) Vinylacetat
eingesetzt, in dem der Polyester zu lösen war. Zusätzlich wurden 1,5 g eines Mischpolymerisats der Säurezahl 10 aus Styrol und Acrylsäure in a/b oder c gelöst zugesetzt oder 3,5 g Triethanolamin gleichzeitig mit Wasser dem Gemisch zugesetzt. Die Polymerisation erfolgte bei 60 - 70 °C bis zur Aushärtung.

### Vergleichsbeispiel 8

Ein Vorpolymerisat sirupähnlicher Konsistenz aus Methylmethacrylat 70 g, 16,5 g Ethylenglykoldimethacrylat, 4,0 g Benzoylperoxyd-Paste (50%ig) und 10,0 g Polyvinylchloridpulver wurden gut vermischt und mit 100 g Wasser zur Emulsion verrührt. Die Gießmasse ließ man zur Entlüftung einige Zeit stehen, setzte dann 1,5 g Dimethylparatoluidin zu und strich sie auf einer Fläche aus (Dicke 5 - 10 mm). Bei 60 °C wurde der Aufstrich in 10-15 Minuten auspolymerisiert. Das Wasser ließ man bei normaler Raumtemperatur (20 °C) langsam austrocknen.

### Vergleichsbeispiel 9

100 g Polyester-Gießharz, bestehend aus 65,0 g ungesättigtem Polyester und 35,0 g Styrol, Säurezahl 32 (SZ = mg KOH pro 1 g Substanz) wurden 4,0 g Benzoylperoxydpaste (50%ig) und 5,0 g Polyvinylchloridpulver zugemischt. Das Ganze wurde mit 150 g Wasser zur Emulsion verrührt, nach Entlüftung wurden 30,0 g Styrol mit 0,8 g Dimethylparatoluidin zugemischt und die Gießmasse nach Verarbeitung bei 20 °C ausgehärtet. Das Wasser wurde bei 100 °C ausgetrieben.

### Vergleichsbeispiel 10

In 35,0 g Styrol wurden 60 g eines ungesättigten Polyesters, Säurezahl 32, gelöst. Dem Gießharz wurden 25,0 g Isopren und 3,0 g Triethanolamin sowie 2,0 g Bezoylperoxyd zugesetzt. Das Ganze wurde mit 0,5 g Dimethylparatoluidin und 80,0 g Wasser zur Emulsion verrührt. Nach Vergießen wurde bei 25 °C ausgehärtet. Das Wasser wurde bei 100 °C aus dem festen Material ausgetrieben.

### Vergleichsbeispiel 11

75,0 g Diallylphthalat, 25 g Methylmethacrylat wurden 2,0 g Benzoylperoxyd und 1,5 g Dimethylparatoluidin und 50,0 g eines Vorkondensats aus Diallylphthalat gemischt und mit 75,0 g Wasser zur Emulsion verrührt. Die erhaltene Gießmasse wurde bei 50 °C in Formen vergossen, auspolymerisiert, das Wasser anschließend bei 100 °C ausgetrieben.

### Vergleichsbeispiel 12

In 93,0 g Methylmethacrylat wurden 5,0 g E-Polystyrol (Mischpolymerisat aus Butadien und Styrol), 2,0 g Benzoylperoxyd gelöst, dann 1,5 g Dimethylparatoluidin und 100, 0 g eines pulverförmigen Mischpolymerisates aus 40 Teilen Styrol und 60 Teilen eines ungesättigten Polyesters zugesetzt und mit 150 g Wasser bis zur Emulsionsbildung gerührt. Die Gießmasse wurde nach Verarbeitung bei 50 °C ausgehärtet. Das Wasser wurde aus den Formkörpern bei 100 °C ausgetrieben.

### Ergebnis der Vergleichsbeispiele:

Die entstehenden Formkörper haben eine geringe Festigkeit und zerbröseln leicht. Zudem haben die entstehenden Formkörper eine geringe Wärmeleitfähigkeit und eignen sich daher nicht für die rasche Fertigung beispielsweise im Vakuumtiefziehverfahren oder von Sanitärkeramik.

## Patentansprüche

1. Gießfähige Zusammensetzung zur Herstellung eines porösen, harzgebundenen Formkörpers enthaltend
a) 100 bis 200 Gewichtstelle einer Harzmischung,
b) 100 bis 200 Gewichtsteile einer Wasserkomponente,
c) 80 bis 700 Gewichtsteile Metallpartikel, und
d) 1 bis 15 Gewichtsteile Radikalstarter.

2. Zusammensetzung gemäß Anspruch 1, **dadurch gekennzeichnet, dass** die Harzmischung folgende Bestandteile enthält:
i) 30 bis 94 Gew.% Methacrylat, Methacrylatderivate oder Mischungen derselben,
ii) 5 bis 65 Gew.% Styrol, Styrolderivate oder Mischungen derselben,
iii) 1 bis 5 Gew.% Hilfsstoffe, ausgewählt aus der Gruppe Emulgatoren, Beschleuniger und Mischungen derselben.

3. Zusammensetzung gemäß einem der Ansprüche 1 oder 2, **dadurch gekennzeichnet, dass** die Harzmischung 2 bis 20 Gew.% 2-Hydroxyethylmethacrylat enthält.

4. Zusammensetzung gemäß einem der Ansprüche 1 bis 3, **dadurch gekennzeichnet, dass** die Wasserkomponente neben Wasser auch 0,1 bis 3 Gew.% Glykolether, Derivate von Glykolether oder Mischungen derselben enthält.

5. Zusammensetzung gemäß einem der Ansprüche 1 bis 4, **dadurch gekennzeichnet, dass** die Metallpartikel Aluminiumpartikel sind.

6. Zusammensetzung gemäß einem der Ansprüche 1 bis 5, **dadurch gekennzeichnet, dass** die Metallpartikel einen mittleren Durchmesser von 0,1 bis 300 µm, insbesondere in einem Bereich von 5 bis 100 µm aufweisen.

7. Zusammensetzung gemäß einem der Ansprüche 1 bis 6, **dadurch gekennzeichnet, dass** in der Zusammensetzung überwiegend Metallpartikel enthalten sind.

8. Zusammensetzung gemäß einem der Ansprüche 1 bis 7, **dadurch gekennzeichnet, dass** in der Zusammensetzung mehr Gewichtsteile der Wasserkomponente als Gewichtstelle der Harzmischung enthalten sind.

9. Verfahren zur Herstellung eines porösen, harzgebundenen Formkörpers, wobei man
a) in einem ersten Schritt die Zusammensetzung gemäß einem der Ansprüche 1 bis 8 zu einer Emulsion verrührt, und
b) in einem zweiten Schritt diese Emulsion in eine Gussform gießt, wobei sie unter Bildung eines Giesslings vorhärtet, und
c) in einem dritten Schritt den vorgehärteten Giessling entformt und für wenigstens 1 h bei über 100 °C erhitzt, wobei zum einen die Harzmischung aushärtet und zum anderen während der Aushärtung das Wasser entfernt wird,
so dass ein poröser, harzgebundener und mit Metallpartikeln gefüllter Formkörper entsteht.

10. Poröser, harzgebundener und mit Metallpartikeln gefüllter Formkörper, **dadurch gekennzeichnet, dass** er einen mittleren Porendurchmesser In einem Bereich von 0,1 bis 10 µm aufweist, **enthaltend die ausgehärtete Zusammensetzung gemäß einem der Ansprüche 1 bis 8.**

## Claims

1. A pourable composition for preparing a porous, resin-bonded moulded body, containing
a) 100 to 200 parts by weight of a resin mixture,
b) 100 to 200 parts by weight of an aqueous component,
c) 80 to 700 parts by weight of metal particles, and
d) 1 to 15 parts by weight of a radical starter.

2. The composition according to claim 1, **characterised in that** the resin mixture contains the following ingredients:
i) 30 to 94% by weight of methacrylate, methacrylate derivatives or mixtures thereof,
ii) 5 to 65% by weight of styrene, styrene derivatives or mixtures thereof,
iii) 1 to 5% by weight of auxiliary agents selected from the group of emulsifiers, accelerators and mixtures thereof.

3. The composition according to any one of claims 1 or 2, **characterised in that** the resin mixture contains 2 to 20% by weight of 2-hydroxyethyl methacrylate.

4. The composition according to any one of claims 1 or 3, **characterised in that** the aqueous component contains in addition to water also 0.1 to 3% by weight of glycol ether, glycol ether derivatives or mixtures thereof.

5. The composition according to any one of claims 1 to 4, **characterised in that** the metal particles are aluminium particles.

6. The composition according to any one of claims 1 to 5, **characterised in that** the metal particles have a mean diameter from 0.1 to 300 µm, in particular in a range from 5 to 100 µm.

7. The composition according to any one of claims 1 to 6, **characterised in that** the composition mainly contains metal particles.

8. The composition according to any one of claims 1 to 7, **characterised in that** the composition contains more parts by weight of the aqueous component than parts by weight of the resin mixture.

9. A process for preparing a porous, resin-bonded moulded body, wherein
a) in a first step the composition according to any one of claims 1 to 8 is stirred to form an emulsion, and
b) in a second step said emulsion is poured in a casting mould, where it precures to form a casting, and
c) in a third step the precured casting is demoulded and heated to greater than 100°C for at least 1 h, wherein on the one hand the resin mixture cures and on the other hand the water is removed during curing,
such that a porous, resin-bonded and metal particle-filled moulded body results.

10. A porous, resin-bonded and metal particle-filled moulded body containing the cured composition according to any one of claims 1 to 8, **characterised in that** it has a mean pore diameter ranging from 0.1 to 10 µm.

## Revendications

1. Composition de moulage pour la préparation d'un corps moulé poreux lié par de la résine, contenant
a) de 100 à 200 parties en poids d'un mélange de résines,
b) de 100 à 200 parties en poids de composant d'eau,
c) de 80 à 700 parties en poids de particules métalliques, et
d) de 1 à 15 parties en poids d'amorceur radicalaire.

2. Composition selon la revendication 1, **caractérisée en ce que** le mélange de résines contient les composants suivants :
i) de 30 à 94 % en poids de méthacrylate, de dérivés de méthacrylate, ou de mélanges de ceux-ci ;
ii) de 5 à 65 % en poids de styrène, de dérivés de styrène, ou de mélanges de ceux-ci,
iii) 1 à 5 % en poids d'excipients choisis dans le groupe constitué par des émulsifiants, des accélérateurs, et des mélanges de ceux-ci.

3. Composition selon la revendication 1 ou 2, **caractérisée en ce que** le mélange de résines contient de 2 à 20 % en poids d'hydroxyéthylméthacrylate.

4. Composition selon l'une quelconque des revendications 1 à 3, **caractérisée en ce que** le composant d'eau contient, en plus de l'eau, de 0,1 à 3 % en poids d'éther de glycol, de dérivés d'éther de glycol, ou de mélanges de ceux-ci.

5. Composition selon l'une quelconque des revendications 1 à 4, **caractérisée en ce que** les particules métalliques sont des particules d'aluminium.

6. Composition selon l'une quelconque des revendications 1 à 5, **caractérisée en ce que** les particules métalliques ont un diamètre moyen de 0,1 à 300 µm, en particulier dans une plage de 5 à 100 µm.

7. Composition selon l'une quelconque des revendications 1 à 6, **caractérisée en ce que** la composition contient principalement des particules métalliques.

8. Composition selon l'une quelconque des revendications 1 à 7, **caractérisée en ce que** la composition contient plus de parties en poids du composant d'eau que de parties en poids du mélange de résines.

9. Procédé de préparation d'un corps moulé poreux lié par de la résine, dans lequel :
a) dans une première étape, la composition selon l'une quelconque des revendications 1 à 8 est agitée pour former une émulsion, et
b) dans une deuxième étape, cette émulsion est versée dans un moule, où elle prend la forme d'une pièce moulée, et
c) dans une troisième étape, la pièce moulée pré-durcie est retirée du moule puis chauffée pendant au moins 1 heure à plus de 100°C, de sorte que premièrement le mélange de résines durcit, et deuxièmement l'eau est éliminée pendant le durcissement,
de sorte qu'un corps moulé poreux lié par la résine et chargé de particules métalliques est formé.

10. Corps moulé poreux lié par de la résine et chargé de particules métalliques, **caractérisé en ce qu'**il présente un diamètre moyen de pore dans une plage de 0,1 à 10 µm, comprenant la composition durcie selon l'une quelconque des revendications 1 à 8.
